# EUROPEAN PATENT SPECIFICATION

(11) **EP 4 373 761 B1**
(45) Date of publication and mention of the grant of the patent: **02.09.2026**
(21) Application number: 22747689.2
(22) Date of filing: 11.07.2022
(51) Int. Cl.: B65D 47/20

(54) **METHOD FOR MANUFACTURING A SELF-CLOSING DISPENSING VALVE**
VERFAHREN ZUR HERSTELLUNG EINES SELBSTSCHLIESSENDEN ABGABEVENTILS
PROCÉDÉ DE FABRICATION D'UNE VALVE DE DISTRIBUTION À FERMETURE AUTOMATIQUE

(30) Priority: 22.07.2021 NL 2028805
(43) Date of publication of application: 29.05.2024
(73) Proprietor: Silgan Dispensing Systems Group B.V., 6716 AA Ede (NL)
(72) Inventor: MERTENS, Alwin, 7335 JG Apeldoorn (NL); DEN BOER, Sebastiaan Wilhelmus Josephus, 6716 AA Ede (NL); ELLENKAMP-VAN OLST, Lenny Marita, 7004 DN Doetinchem (NL)
(74) Representative: EP&C
(86) International application number: PCT/EP2022/069315
(87) International publication number: WO 2023/001619

(56) References cited:
- WO-A1-2012/150937
- US-A1- 2014 196 798

## Description

The invention relates to a method for manufacturing of a self-closing dispensing valve comprising a valve head with a dispensing orifice, and a peripheral retaining flange adapted to fix the valve in a dispensing closure.

This type of self-closing valves is well known and is mounted commonly in dispensing closures to be arranged on a container containing a substance to be dispensed. Well known applications are for example dispensing closures for squeeze bottles such as ketchup, mayonnaise or honey bottles and containers for other edible substances. Another example is dispensing closures for squeezable bottles for haircare, bodycare or cleaning products. When the container is squeezed and thus the interior is pressurized, the valve orifice opens and the substance can be dispensed through the valve. After the pressure on the container is relieved, the valve closes automatically due to the elasticity of the valve material.

An example of such a valve is shown in WO 2008/074517. Figs. 3 to 5 of WO 2008/074517 show a self-closing valve integrally formed of silicone rubber by injection moulding. It has a valve head with a circular outer contour, a concave outer surface and a convex inner surface. The valve furthermore has a circular retaining flange at an axial distance from the valve head, by which the valve can be fixed to a dispensing closure. The axially offset valve head and retaining flange are connected by a connector sleeve which has substantially a cylindrical or a frusto-conical shape. The valve is placed and fixed to a dispensing closure which is adapted to be coupled to a container with a dispensible content such as foodstuffs, e.g. ketchup or other sauces, or such as cosmetic or care products. The valve head is provided with slits which form a dispensing orifice which opens upon pressurization of the container.

Although silicone rubber valves are very fit for their purpose, they pose a problem after use, when the user throws away the container with the dispensing closure in which the valve is still fixed. The containers and the dispensing closure are usually made of a recyclable plastics material such as PET, PE or PP. However, the silicone material cannot be recycled and therefore disturbs the recycle streams of the containers and closures.

WO 2020/190133 discloses a self-closing valve which mitigates the recycling problem and proposes a valve made of a non-silicone elastic material, such as a plastomer or a thermoplastic elastomer, which has favourable migration properties, i.e. is compatible with foodstuffs. US 2014/196798 A1 discloses a diaphragm check valve for microscale pumps and methods of manufacture thereof.

In practise, containers are often filled with a fluid edible substance, such as sauces by means of a "hot-fill" process, in which a filling device may dispense the substance having a temperature of 85°C in the container. A reason for hot-fill may be to make the sauce or other substance better preservable and provide it with a longer shelf life. In the container the temperature may raise about 70-80°C because of the hot fill process. Vapor coming from the hot substance may reach the self-closing valve when the closure, including the self-closing valve, is placed on the container, which may warm up the valve to temperatures above 50°C. Also in other circumstances, such as during transport or in storage, temperatures may rise toward 40°C or even 50°C.

A problem that may occur with some of the plastics materials which may be suitable for moulding the known non-silicone valve is a low temperature resistance. Thereby the valve head may deform already at about 50°C. This has an influence on the opening and closing behaviour of the valve under the influence of pressure.

The invention has for an object to provide a method for manufacturing a self-closing valve which reduces the sensitivity of the valve to temperature influences.

This object is achieved by a method for manufacturing of a self-closing dispensing valve comprising a valve head with a dispensing orifice, and a peripheral retaining flange adapted to fix the valve in a dispensing closure, the method comprising the following steps:
- injection moulding or compression injection moulding the valve from a plastomer material;
- transporting the injection moulded valve to an oven;
- bringing the valve in the oven to a temperature in a range 50-60°C, preferably a temperature of 55°C;
- allowing the valve to cool;
- cutting the dispensing orifice in the valve head.

According to the invention the valve resides in an oven at a temperature in the range 50-60°C, preferably 55°C, after it has been injection moulded and cured. The residence time in the oven is preferably a few minutes, sufficient to allow a relaxation of the material to take place, which makes the valve less sensitive for heat, while at the same time the valve has an opening and closing behaviour at room temperature similar to conventional valves of silicone.

In a practical embodiment the plastomer material comprises or is flexible PE material.

In a possible embodiment the plastomer material may be a PE blend comprising different grades of PE. In a practical embodiment the PE blend may contain two different grades of PE.

Preferably the valve is cooled to room temperature before dispensing orifice is cut in the valve head.

Advantageously the orifice is formed by cutting two intersecting slits in the valve head.

The invention also relates to a method for packaging an dispensible edible substance in a container, comprising the following steps:
- heating the substance in a filling device to a preservation improving temperature, e.g. of 70-90°C, preferably 70-85°C
- filling the container by the filling device at said temperature;
- closing the container by assembling the container with a dispensing closure comprising a self-closing dispensing valve made by a method as defined in the above.

The disclosure relates to a self-closing dispensing valve comprising a valve head with a dispensing orifice cut in the valve head, and a peripheral retaining flange adapted to fix the valve in a dispensing closure, the valve being made of a plastomer, preferably a flexible PE material, wherein the valve has an opening and closing characteristic, which defines an opening area of the dispensing orifice vs. an internal pressure applied on the valve head, at room temperature, and wherein the valve is adapted to be exposed to temperatures between 50-80°C, without changing the opening and closing characteristic for normal use at room temperature.

In a possible embodiment of the valve the plastomer contains a blend of different grades, preferably two grades of PE.

In a possible embodiment of the valve has an axially offset valve head and retaining flange, which are connected by a connector sleeve. The connector sleeve may have substantially a cylindrical or a frusto-conical shape.

The disclosure also relates to a method for packaging an dispensible edible substance in a container, comprising the following steps:
- heating the substance in a filling device to a preservation improving temperature, e.g. of 70-90°C, preferably 70-85°C,
- filling the container by the filling device at said temperature;
- closing the container by assembling the container with a dispensing closure comprising a self-closing dispensing valve as defined in the above.

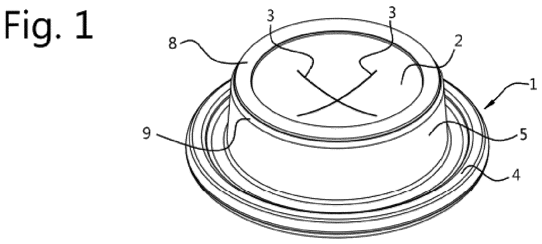

Figure 1 shows an isometric view of a self-closing valve according to the invention.

The self-closing valve 1 comprises a valve head 2. The valve head 2 of the valve 1 has a dome shape with a concave exterior side and a convex interior side. The self closing valve 1 furthermore comprises a circular peripheral retaining flange 4 spaced apart from the valve head 2 in an axial direction. In the embodiment shown the flange 4 comprises a thickened outer portion. A connecting sleeve 5 is integrally connected with the valve head 2 on one end and the retaining flange 4 on another end. The retaining flange 4 is adapted to mount the self-closing valve 1 in a dispensing closure of a container. The valve head 2 is connected to an upper end of the connector sleeve 5 by a hinge portion 8. To get an idea of the overall dimensions, a practical embodiment of the valve 1 has an outer diameter of about 16 mm, and a height H of 5 mm, and the valve head 2 has a diameter of about 10 mm.

The self-closing valve 1 is made by injection moulding or injection compression moulding of an elastic material, being a plastomer, in particular a polyethylene (PE) or a polyethylene blend (PE blend).

After the self-closing valve 1 is moulded, ejected from the mould and cured, it is moved to an oven. In the oven, the valve is brought to a temperature in a range 50-60°C, preferably a temperature of 55°C. The valve 1 is maintained at this temperature for a certain amount of time, in practise a few minutes.

After the self-closing valve 1 is heated in the oven, it is taken out of the oven and allowed to cool, preferably to room temperature.

Finally, the valve head 2 is provided with two intersecting through slits 3, which form a dispensing orifice. The through slits 3 intersect in the centre of the valve head 2. By the slits 3 the valve head 2 is divided in four flaps which bend away from each other under the influence of pressure. When the container is squeezed and thus the interior is pressurized, the valve is pressurized on its interior side, i.e. the convex side of valve head 2 and the inner side of the connector sleeve 5. Due to this pressure the orifice opens and the substance can be dispensed through the valve. After the pressure on the container is relieved, the valve closes automatically due to the elasticity of the valve material.

The self-closing valve 1 valve has an opening and closing characteristic, which defines an opening area of the dispensing orifice vs. a pressure on the interior side applied on the valve, at room temperature.

By "tempering" the valve 1 in the oven at a temperature about 55°C after it has been moulded, the opening and closing behaviour of the self-closing valve 1 is made less sensitive for temperature influences. That is, the self-closing valve 1 is adapted to be exposed to temperatures between 50-80°C, without changing the opening and closing characteristic for normal use at room temperature. A foreseen practical situation, in which the valve 1 is subjected to such temperatures, may be after filling a container with a hot substance (a so called "hot-fill"), which may a sauce or other edible substance. After filling the container with the hot substance, the container is closed with a closure in which the valve 1 is incorporated. The still hot substance causes heating of the valve 1 and may cause the valve 1 to be subjected to vapor having temperatures of 50-80°C.

## Claims

1. Method for manufacturing of a self-closing dispensing valve (1) comprising a valve head (2) with a dispensing orifice, and a peripheral retaining flange (4) adapted to fix the valve (1) in a dispensing closure, the method comprising the following steps:
- injection moulding or compression injection moulding the valve (1) from a plastomer material;
- transporting the injection moulded valve (1) to an oven;
- bringing the valve (1) in the oven to a temperature in a range 50-60°C, preferably a temperature of 55°C;
- allowing the valve (1) to cool;
- cutting the dispensing orifice in the valve head (2).

2. Method according to claim 1, wherein the plastomer material comprises or is flexible PE material.

3. Method according to claim 1 or 2, wherein plastomer material is a PE blend comprising different grades of PE, preferably two grades of PE.

4. Method according to any of the claims 1-3, wherein the orifice is formed by cutting two intersecting slits (3) in the valve head (2).

5. Method for packaging a dispensible edible substance in a container, comprising the following steps:
- heating the substance in a filling device to a preservation improving temperature, e.g. of 70-90°C, preferably 70-85°C,
- filling the container by the filling device at said temperature;
- closing the container by assembling the container with a dispensing closure comprising a self-closing dispensing valve (1) made by a method according to any of the claims 1-4.

## Patentansprüche

1. Verfahren zur Herstellung eines selbstschließenden Ausgabeventils (1), das einen Ventilkopf (2) mit einer Ausgabeöffnung und einen umlaufenden Halteflansch (4) umfasst, der dazu ausgeführt ist, das Ventil (1) in einem Ausgabeverschluss zu fixieren, wobei das Verfahren die folgenden Schritte umfasst:
- Spritzgießen oder Kompressionsspritzgießen des Ventils (1) aus einem Plastomer-Material,
- Transportieren des spritzgegossenen Ventils (1) in einen Ofen,
- Erhitzen des Ventils (1) im Ofen auf eine Temperatur im Bereich von 50 - 60°C, vorzugsweise eine Temperatur von 55°C,
- Abkühlenlassen des Ventils (1),
- Schneiden der Ausgabeöffnung in dem Ventilkopf (2).

2. Verfahren nach Anspruch 1, wobei das Plastomer-Material flexibles PE-Material umfasst oder ist.

3. Verfahren nach Anspruch 1 oder 2, wobei das Plastomer-Material eine PE-Mischung ist, die verschiedene PE-Qualitäten, vorzugsweise zwei PE-Qualitäten, umfasst.

4. Verfahren nach einem der Ansprüche 1 - 3, wobei die Öffnung durch Schneiden von zwei sich kreuzenden Schlitzen (3) in dem Ventilkopf (2) gebildet wird.

5. Verfahren zum Verpacken einer ausgebbaren essbaren Substanz in einem Behälter, umfassend die folgenden Schritte:
- Erhitzen der Substanz in einer Füllvorrichtung auf eine haltbarkeitsverbessernde Temperatur, z. B. von 70 - 90°C, vorzugsweise 70 - 85°C,
- Füllen des Behälters mittels der Füllvorrichtung bei der Temperatur,
- Verschließen des Behälters durch Zusammenbauen des Behälters mit einem Ausgabeverschluss, der ein durch ein Verfahren nach einem der Ansprüche 1 - 4 hergestelltes selbstschließendes Ausgabeventil (1) umfasst.

## Revendications

1. Procédé de fabrication d'une valve (1) de distribution à fermeture automatique comprenant une tête de valve (2) dotée d'un orifice de distribution et d'une bride de retenue (4) périphérique conçue pour fixer la valve (1) dans une fermeture de distribution, le procédé comprenant les étapes consistant à :
- mouler par injection ou mouler par injection sous compression la valve (1) à partir d'un matériau plastomère ;
- transporter la valve injectée (1) vers un four ;
- amener la valve (1) dans le four à une température dans une plage comprise entre 50 et 60 °C, de préférence une température de 55 °C ;
- laisser refroidir la valve (1) ;
- découper l'orifice de distribution dans la tête de valve (2).

2. Procédé selon la revendication 1, le matériau plastomère comprenant ou étant un matériau PE flexible.

3. Procédé selon la revendication 1 ou 2, le matériau plastomère étant un mélange de PE comprenant différentes qualités de PE, de préférence deux qualités de PE.

4. Procédé selon l'une quelconque des revendications 1 à 3, l'orifice étant formé en découpant deux fentes croisées (3) dans la tête de valve (2).

5. Procédé pour emballer une substance comestible jetable dans un récipient, comprenant les étapes consistant à :
- chauffer la substance dans un dispositif de remplissage à une température d'amélioration de conservation, par exemple compris entre 70 et 90 °C, de préférence compris entre 70 et 85 °C,
- remplir le récipient par le dispositif de remplissage à ladite température ;
- fermer le récipient par assemblage du récipient avec une fermeture de distribution comprenant une valve de distribution (1) à fermeture automatique réalisée par un procédé selon l'une quelconque des revendications 1 à 4.
